# EUROPÄISCHE PATENTSCHRIFT

(11) **EP 4 033 174 B1**
(45) Veröffentlichungstag und Bekanntmachung des Hinweises auf die Patenterteilung: **30.09.2026**
(21) Anmeldenummer: 21153530.7
(22) Anmeldetag: 26.01.2021
(51) Int. Cl.: F24S 25/16, F24S 25/11, F24S 25/63, F24S 25/40, F24S 25/617, H02S 20/24, H02S 20/00, H02S 20/10, F24S 25/60, F24S 25/00

(54) **MODULTRÄGER FÜR SOLARMODULE SOWIE ANORDNUNG MIT MEHREREN MODULTRÄGERN**
MODULE HOLDER FOR SOLAR MODULES AND ASSEMBLY WITH MULTIPLE MODULE HOLDERS
SUPPORT DE MODULE POUR MODULES SOLAIRES, AINSI QU'AGENCEMENT POURVU DE PLUSIEURS SUPPORTS DE MODULE

(43) Veröffentlichungstag der Anmeldung: 27.07.2022
(73) Patentinhaber: PV Integ AG, 6030 Ebikon (CH)
(72) Erfinder: Meyer David, 6030 Ebikon (CH)
(74) Vertreter: Nückel, Thomas

(56) Entgegenhaltungen:
- EP-A1- 2 549 551
- EP-A1- 3 264 594
- WO-A1-2020/211182
- CN-A- 108 462 443
- CN-U- 207 994 992
- CN-U- 212 063 887
- DE-U1- 202007 013 325
- DE-U1- 202010 007 600
- DE-U1- 202018 103 244
- US-A1- 2013 133 275
- US-A1- 2015 330 669
- US-A1- 2020 366 234

## Beschreibung

### Technisches Gebiet

Die Erfindung betrifft einen Modulträger für Solarmodule sowie eine Anordnung mit mehreren Modulträgern. Mit Hilfe mehrerer der Modulträger kann ein Solarmodulfeld aufgebaut werden.

### Stand der Technik

Aus dem Stand der Technik DE 20 2008 014 173 U1 ist ein Träger für ein Solarpaneel bekannt. Der Träger weist einen Boden, eine niedrige Erhebung und eine grosse Erhebung auf, wobei der Boden die niedrige Erhebung und die grosse Erhebung einstückig ausgebildet und aus einer flachen Kunststoffplatte geformt sind. Auf dem Träger ist das Solarpaneel befestigt, wobei das Solarpaneel auf der niedrigen Erhebung und der grossen Erhebung aufliegt, sodass das Solarpaneel gegenüber der Horizontalen geneigt ist. Diese Lösung hat den Nachteil, dass solche Träger nicht ohne weiteres stapelbar sind, sodass sie im Lager und auch beim Transport relativ viel Platz benötigen. Ein weiterer Nachteil des Trägers ist, dass der Neigungswinkel fest vorgegeben ist. Zudem ist die Grundfläche des Trägers fest vorgegeben, sodass der Träger nicht oder nur mit erheblichem Aufwand verkleinert werden kann. Dies ist jedoch insbesondere dann notwendig, wenn im Randbereich eines Solarpaneelfelds nicht genügend Stellfläche für einen ganzen Träger zur Verfügung steht.

Des weiteren ist aus der Druckschrift DE 20 2018 103 244 U1 ein Montagesystem zur Montage von Photovoltaikmodulen auf Dächern mit Bodenschienen und durch Rastverbindungen verbundenen Stützen bekannt. Die Bodenschienen weisen Zungen auf, die elastisch in die Bodenschiene hineindrückbar sind. Die Stütze wird mit der Bodenschiene unter Mitwirkung der Zunge über eine Rastverbindung verbunden. Dazu weist die Stütze unten einen hakenförmigen Fortsatz auf, welcher einen vertikalen Schenkel und einen sich daran anschliessenden, in Längsrichtung der Bodenschiene verlaufenden horizontalen Schenkel umfasst. Die Bodenschiene und die Stütze sind so ausgebildet, dass die Zunge durch den hakenförmigen Fortsatz elastisch in die Bodenschiene hineindrückbar ist und zurückspringt, nachdem die Stütze in der Bodenschiene in ihre bestimmungsgemässe Lage verschoben wurde.

Das Dokument CN 207 994 992 U betrifft ein flaches Photovoltaikmodul für die Befestigung auf Dächern. Es umfasst ein Fertigteil aus Beton, in dessen oberem und unterem Teil jeweils ein Stahlblech vorab eingebettet ist, wobei das Stahlblech im oberen Teil mit einem Ständer versehen ist, dessen oberes Ende mit einer Schräge befestigt ist, an der entlang der Längsrichtung mindestens zwei Flügelstreifen befestigt sind. Das Stahlblech im unteren Teil weist mindestens vier Schweißpunkte auf. Diese Grundkonstruktion garantiert eine feste Stabilität auf der Basis unter Windlast, lang anhaltendem Wind und Schneelast und kann wirksam Bruchphänomene wie Ausreißen, Bruch und Versagen der Basis unter dieser Belastung verhindern.

Zudem können verschiedene Stützen auf der Grundplatte des Modulträgers angeordnet werden, sodass verschiedene Neigungswinkel erzeugt werden können.

Der CN 108 462 443 A beschreibt einen Modulträger für Solarmodule, aufweisend eine Grundplatte mit Vertiefungen, und mehrere Stützen, die auf ihren Unterseiten einen Steckbereich aufweisen.

Darüber hinaus können die Stützen auf der Grundplatte an verschiedenen Stellen angeordnet werden, sodass auch dadurch verschiedene Aufständerungen möglich sind.

Ein weiterer Vorteil des erfindungsgemässen Modulträgers für Solarmodule ist, dass dessen Grundfläche ohne weiteres verkleinert und an die örtlichen Gegebenheiten angepasst werden kann. Dies ist zum Beispiel dann von Vorteil, wenn im Randbereich eines Solarmodulfelds nicht genügend Stellfläche für einen weiteren ganzen Modulträger zur Verfügung steht.

### Darstellung der Erfindung

Eine Aufgabe der Erfindung ist es, einen Modulträger für Solarmodule sowie eine Anordnung mit mehreren Modulträgern anzugeben, der flexibel anwendbar und äusserst einfach aufbaubar ist beziehungsweise die verschieden gestaltbar und äusserst einfach aufbaubar ist.

Vorteilhafterweise können mit dem erfindungsgemässen Modulträger für Solarmodule verschiedene Aufständerungen erzeugt werden.

Zudem können verschiedene Stützen auf der Grundplatte des Modulträgers angeordnet werden, sodass verschiedene Neigungswinkel erzeugt werden können.

Darüber hinaus können die Stützen auf der Grundplatte an verschiedenen Stellen angeordnet werden, sodass auch dadurch verschiedene Aufständerungen möglich sind.

Ein weiterer Vorteil des erfindungsgemässen Modulträgers für Solarmodule ist, dass dessen Grundfläche ohne weiteres verkleinert und an die örtlichen Gegebenheiten angepasst werden kann. Dies ist zum Beispiel dann von Vorteil, wenn im Randbereich eines Solarmodulfelds nicht genügend Stellfläche für einen weiteren ganzen Modulträger zur Verfügung steht.

Die Aufgabe wird durch einen Modulträger für Solarmodule mit den in Patentanspruch 1 angegebenen Merkmalen gelöst, welcher auch die Erfindung definiert.

Der erfindungsgemäss Modulträger für Solarmodule umfasst eine Grundplatte mit Vertiefungen und mehrere Stützen, wobei jede der Stützen auf ihrer Unterseite einen Steckbereich mit mehreren Noppen aufweist. Der Steckbereich ist so ausgebildet, dass die Noppen in die Vertiefungen der Grundplatte steckbar sind.

Die Aufgabe wird zudem durch eine Anordnung mit mehreren Modulträgern mit den in Patentanspruch 17 angegebenen Merkmalen gelöst.

Bei der erfindungsgemässen Anordnung mit mehreren Modulträgern ist vorgesehen, dass die Grundplatte eines ersten Modulträgers auf der Grundplatte eines zweiten Modulträgers überlappend aufliegt. Beide Grundplatten bilden im überlappenden Bereich in beiden horizontalen Richtungen bzw. Dimensionen einen Formschluss.

Vorteilhafte Weiterbildungen der Erfindung ergeben sich aus den in den abhängigen Patentansprüchen angegebenen Merkmalen.

Bei einer Ausführungsform des erfindungsgemässen Modulträgers weist ein Teil der Stützen eine erste Höhe auf. Ein weiterer Teil der Stützen weist eine von der ersten Höhe abweichende, zweite Höhe auf. Durch die unterschiedlich hohen Stützen können die Solarmodule gegenüber der Horizontalen geneigt angeordnet und damit optimaler auf den Einstrahlwinkel des Sonnenlichts ausgerichtet werden. Dies wirkt sich positiv auf den Wirkungsgrad der Solarmodule aus.

Erfindungsgemäß sind die Vertiefungen in der Grundplatte rasterartig über die Grundplatte verteilt angeordnet. Das Rastermass gibt die Teilung vor, mit der die Stützen auf die Grundplatte gesteckt werden können. Je kleiner das Rastermass ist, desto mehr Steckpositionen stehen zur Verfügung. Ein aufwändiges Ausmessen, um die richtigen Positionen der Stützen auf der Grundplatte zu finden, entfällt.

Bei einer anderen Ausführungsform des erfindungsgemässen Modulträgers weisen die in den Grundplatten vorhandenen Vertiefungen die gleiche Form auf. Dadurch wird gewährleistet, dass die Noppen der Stützen in alle Vertiefungen der Grundplatten passen und den gewünschten Formschluss bilden.

Erfindungsgemäß weist die Grundplatte Stege auf, die gitterförmig über die Grundplatte verteilt sind.

Bei einer anderen Weiterbildung des erfindungsgemässen Modulträgers weisen die Stege einen dreieck- oder trapezförmigen Querschnitt auf. Dadurch wird eine einfache Selbstzentrierung sowohl beim Verlegen als auch beim Stapeln der Grundplatten erreicht. Zudem sind die gestapelten Grundplatten leichter endstapelbar. Darüber hinaus lässt sich auf diese Weise die Stabilität der Grundplatte erhöhen.

Bei dem erfindungsgemässen Modulträger sind die Vertiefungen durch die Stege voneinander abgegrenzt.

Es kann auch vorgesehen sein, dass bei dem erfindungsgemässen Modulträger die Stege und Vertiefungen der Grundplatte eine Positivform bilden. Die Stütze weist in ihrem Steckbereich eine zur Positivform passende Negativform auf, sodass die Stütze im auf die Grundplatte gesteckten Zustand mit der Grundplatte einen Formschluss bildet.

Darüber hinaus kann bei dem erfindungsgemässen Modulträger vorgesehen sein, dass die Stütze im Steckbereich breit ausgebildet ist und sich nach oben hin verjüngt. Dadurch lässt sich Material einsparen, ohne dass sich dies nachteilig auf die Stabilität der Stütze auswirkt. Zudem wird damit die Standfestigkeit der Stütze erhöht.

Es ist von Vorteil, wenn bei dem erfindungsgemässen Modulträger die Stütze mittels einer oder mehrerer Schrauben oder Nägel mit der Grundplatte verbunden ist. Dadurch wird eine noch stabilere Verbindung zwischen der Grundplatte und der Stütze geschaffen. Der Modulträger kann dadurch noch grössere Kräfte aufnehmen, ohne dass die Stütze umkippt oder es zu einer Beschädigung kommt. Eine solche Kraft kann zum Beispiel ein vom Wind erzeugter Druck oder Sog sein, der auf die Stütze und/oder auf die Solarmodule einwirkt.

Zudem kann bei dem erfindungsgemässen Modulträger vorgesehen sein, dass die Schraube so angeordnet ist, dass sie durch mindestens eine der Noppen und mindestens eine der Seitenwände eines Stegs hindurchragt. Dadurch kann die Stabilität der Verbindung noch weiter optimiert werden.

Darüber hinaus kann bei dem erfindungsgemässen Modulträger die Schraube so angeordnet sein, dass sie durch eine der Noppen und die beiden Seitenwände eines Stegs hindurchragt und in eine der weiteren Noppen hineinragt. Auch dadurch lässt sich die Stabilität der Verbindung noch weiter optimieren.

Bei einer Ausführungsform des erfindungsgemässen Modulträgers ist die Grundplatte aus Kunststoff hergestellt. Dies erlaubt die Anwendung von ausserordentlich kostengünstigen Herstellungsverfahren. Als Kunststoff kann beispielsweise recycelter Kunststoff benutzt werden.

Bei einer anderen Ausführungsform des erfindungsgemässen Modulträgers sind die Stützen aus Kunststoff hergestellt. Dies erlaubt die Anwendung von ausserordentlich kostengünstigen Herstellungsverfahren. Als Kunststoff kann beispielsweise recycelter Kunststoff benutzt werden.

Bei einer weiteren Ausführungsform des erfindungsgemässen Modulträgers ist eine Tragschiene vorgesehen, die am oberen Ende der Stützen befestigt ist. Die Tragschiene dient zum Tragen von Solarmodulen, wie zum Beispiel Photovoltaikmodulen und/oder Solarkollektoren.

Bei einer Weiterbildung des erfindungsgemässen Modulträgers ist eine Befestigungsschraube vorgesehen, um die Tragschiene mit der Stütze zu verbinden. Die Tragschiene weist dazu eine Nut mit einer Nutbreite auf, die kleiner als der Durchmesser der Befestigungsschraube ist. Beim Eindrehen der Befestigungsschraube in die Nut erzeugt die Befestigungsschraube in der Nut ein Gewinde. Das Vorbohren in der Stütze kann entfallen, weil die Befestigungsschraube sich in dem zuvor erzeugten Gewinde abstützen kann und sich selbsttätig in die Stütze schraubt. Der Monteur muss beim Eindrehen der Befestigungsschraube keinen nennenswerten Druck auf sie ausüben. Dies macht sich besonders dann positiv bemerkbar, wenn nicht nur eine, sondern hunderte oder gar tausende von Befestigungsschrauben gesetzt werden müssen.

Bei einer Ausführungsform der erfindungsgemässen Anordnung kann vorgesehen sein, dass die Schraube so angeordnet ist, dass sie durch mindestens eine der Noppen der Stütze, durch mindestens eine der Seitenwände eines Stegs der Grundplatte des ersten Modulträgers und durch mindestens eine der Seitenwände eines Stegs der Grundplatte des zweiten Modulträgers hindurchragt. Dadurch entsteht ein besonders stabiler Verbund.

Bei einer weiteren Ausführungsform der erfindungsgemässen Anordnung sind die Stützen der ersten Höhe über die Tragschiene verbunden und dienen als eine niedrige Stützreihe. Die Stützen der zweiten Höhe sind über eine weitere Tragschiene verbunden und dienen als eine hohe Stützreihe. Die niedrige und die hohe Stützreihe sind vorgesehen, um Solarmodule zu tragen, welche zum Beispiel Photovoltaikmodule oder Solarkollektoren sein können.

Bei einer Weiterbildung der erfindungsgemässen Anordnung sind mehrere niedrige und mehrere hohe Stützreihen alternierend angeordnet. Dadurch können sämtliche Solarmodule gleich ausgerichtet, das heisst mit dem gleichen Neigungswinkel ausgerichtet werden.

Alternativ dazu können bei der erfindungsgemässen Anordnung mehrere niedrige und mehrere hohe Stützreihen vorgesehen sein, wobei zwei der niedrigen Stützreihen benachbart angeordnet sind. Dadurch kann ein Teil der Solarmodule mit einem ersten Neigungswinkel und ein weiterer Teil der Solarmodule mit einem zweiten Neigungswinkel auf der Stützreihe angeordnet werden. Die beiden Neigungswinkel können betragsmässig gleich gross sein; der erste Neigungswinkel ist jedoch in eine erste Himmelsrichtung ausgerichtet, während der zweite Neigungswinkel in der zur ersten Himmelsrichtung entgegengesetzten Richtung ausgerichtet ist. Die beiden Neigungswinkel können so zueinander ausgerichtet sein, dass die benachbarten Solarmodule die Form eines Daches oder ein V bilden.

Schliesslich kann der erfindungsgemässe Modulträger zum Tragen von Solarmodulen, wie Photovoltaikmodulen und/oder Solarkollektoren, verwendet werden.

### Kurze Beschreibung der Zeichnungen

Im Folgenden wird die Erfindung mit mehreren Ausführungsbeispielen anhand von 14 Figuren weiter erläutert.
- Figur 1: zeigt eine mögliche Ausführungsform einer Grundplatte des erfindungsgemässen Modulträgers in einer dreidimensionalen Ansicht.
- Figur 2: zeigt eine mögliche Anordnung von zwei sich überlappenden Grundplatten in einer dreidimensionalen Ansicht.
- Figur 3: zeigt eine erste mögliche Ausführungsform einer Stütze in einer dreidimensionalen Ansicht, die Teil des erfindungsgemässen Modulträgers sein kann.
- Figur 4: zeigt eine zweite mögliche Ausführungsform der Stütze in einer dreidimensionalen Ansicht, die Teil des erfindungsgemässen Modulträgers sein kann.
- Figur 5: zeigt eine erste mögliche Anordnung mehrerer Stützen auf zwei Grundplatten in einer dreidimensionalen Ansicht.
- Figur 6: zeigt die Stütze und die Grundplatte im Querschnitt.
- Figur 7: zeigt eine mögliche Ausführungsform einer Tragschiene in einer Seitenansicht, die Teil des erfindungsgemässen Modulträgers sein kann.
- Figur 8: zeigt die auf die Stütze montierte Tragschiene in der Seitenansicht.
- Figur 9: zeigt einen Ausschnitt des Modulträgers in einer dreidimensionalen Ansicht.
- Figur 10: zeigt eine erste Ausführungsform eines Modulträgerfelds ohne Tragschiene in einer dreidimensionalen Ansicht.
- Figur 11: zeigt das Modulträgerfeld mit Tragschienen.
- Figur 12: zeigt das Modulträgerfeld mit Solarmodulen in einer dreidimensionalen Ansicht.
- Figur 13: zeigt eine zweite Ausführungsform des Modulträgerfelds mit Solarmodulen in einer dreidimensionalen Ansicht.
- Figur 14: zeigt eine dritte Ausführungsform des Modulträgerfelds mit Solarmodulen in einer dreidimensionalen Ansicht.

### Wege zur Ausführung der Erfindung

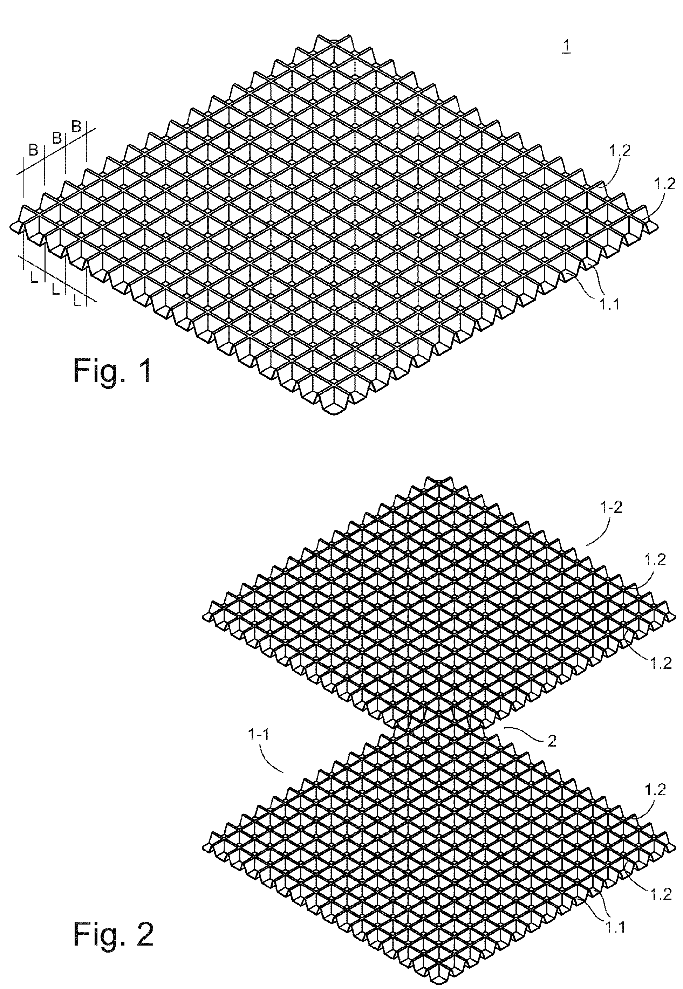

Der erfindungsgemässe Modulträger umfasst eine Grundplatte 1. Eine mögliche Ausführungsform einer solchen Grundplatte 1 ist in Figur 1 in einer dreidimensionalen Ansicht dargestellt. Die Grundplatte 1 kann zum Beispiel aus Kunststoff, wie hochdichtem Polyethylen (HDP) hergestellt sein. Als Verfahren zur Herstellung eignet sich beispielsweise das Tiefziehen. Die Grundplatte 1 ist vorteilhafterweise rasterförmig ausgebildet und weist eine Reihe von Stegen 1.2 auf. Die Stege können, wie in Figur 1 gezeigt, angeordnet sein. Vorzugsweise sind die Stege 1.2 zueinander äquidistant angeordnet. Die einen Stege 1.2 verlaufen in Längsrichtung im Abstand L parallel zueinander. Die anderen Stege 1.2 verlaufen in Querrichtung im Abstand B parallel zueinander. Auf diese Weise bilden die Stege 1.2 eine gitterförmige Struktur. Zwischen den Stegen 1.2 befinden sich Vertiefungen 1.1.

Bei Bedarf können mehrere der Grundplatten 1 auf einfache und schnelle Weise stabil miteinander verbunden werden.

In Figur 2 sind beispielhaft zwei miteinander verbundene Grundplatten 1 gezeigt. Um die Grundplatten 1 voneinander unterscheiden zu können, ist dem Bezugszeichen 1 eine durch einen Bindestrich abgetrennte Nummer nachgestellt. So kennzeichnet das Bezugszeichen 1-1 die erste Grundplatte 1 und das Bezugszeichen 1-2 die zweite Grundplatte 1. Um die beiden Grundplatten 1-1 und 1-2 zu verbindenden, wird eine der beiden Grundplatten so auf die andere Grundplatte gelegt, dass ein überlappender Bereich 2 entsteht. Wird beispielsweise die Grundplatte 1-1 über die Grundplatte 1-2 gelegt, ragen einige der Vertiefungen 1.1 der Grundplatte 1-1 in die Vertiefungen der Grundplatte 1-2. Auf diese Weise entsteht zwischen den beiden Grundplatten 1-1 und 1-2 im Überlappungsbereich 2 ein Formschluss, der in sämtliche horizontale Richtungen wirkt (also auf der x-Achse in beide Richtungen und auch auf der y-Achse in beide Richtungen), sodass beide Grundplatten 1-1 und 1-2 stabil miteinander verbunden sind.

Ein weiterer Vorteil ist, dass die Grundplatten 1 sehr gut stapelbar sind und dabei mit ausserordentlich wenig Stauraum auskommen. Dies ist insbesondere bei der Lagerung und für den Transport relevant. Gerade wenn viele Grundplatten 1 transportiert werden sollen, ist deren geringes Packmass besonders von Vorteil. Zudem wird durch den Formschluss zwischen den einzelnen Grundplatten 1 gewährleistet, dass keine der Grundplatten innerhalb des Stapels verrutscht. Auf diese Weise ist die Ladungssicherung für den Transport der Grundplatten einfach und schnell zu bewerkstelligen.

Bei Bedarf kann im Boden der Vertiefung 1.1 eine Bohrung vorgesehen sein, um Regenwasser nach unten ableiten zu können. Es kann auch für mehrere der Vertiefungen 1.1 jeweils eine Bohrung vorgesehen sein.

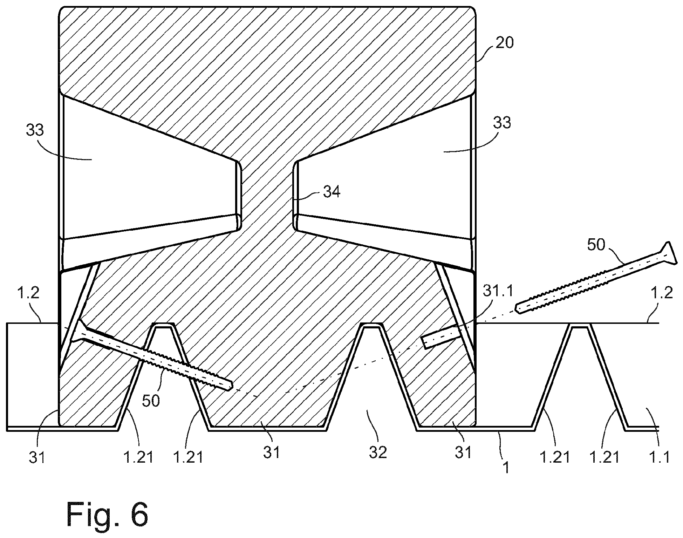

Vorteilhafter Weise weisen die Stege 1.2, wie in Figur 6 gezeigt, schräge Seitenwände 1.21 auf, sodass sich die Stege 1.2 nach oben hin verjüngen. Dementsprechend sind die Vertiefungen 1.1 oben weiter als unten. Dies hat den Vorteil, dass sich die Grundplatten 1 leichter aufeinander stapeln und auch wieder leichter endstapeln lassen. Zudem zentrieren sich die Grundplatten 1 beim Verlegen selbst, sodass ein nachträgliches, aufwändiges Ausrichten der Grundplatten entfällt.

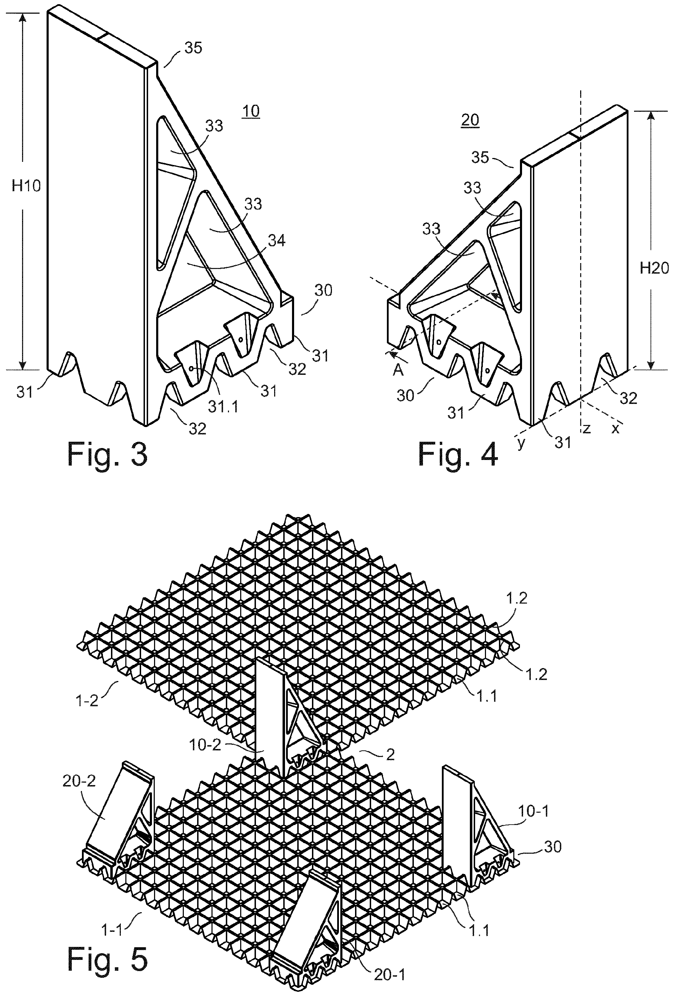

In Figur 3 ist eine erste mögliche Ausführungsform einer Stütze 10 in einer dreidimensionalen Ansicht dargestellt. Die Horizontale wird durch die x- und y-Achse und die Vertikale durch die z-Achse definiert. Die Stütze 10 hat eine definierte Höhe H10. Figur 4 zeigt eine zweite mögliche Ausführungsform einer Stütze 20 in einer dreidimensionalen Ansicht. Die Stütze 20 hat eine definierte Höhe H20. Abgesehen von den unterschiedlichen Höhen H10 und H20 sind die beiden Stützen 10 und 20 baugleich. Vorzugsweise liegt die Höhe H10 bei 62 cm und die Höhe H20 bei 46 cm.

Im unteren Bereich weist die Stützen 10, 20 einen Steckbereich 30 auf. Wenn im Folgenden von der Stütze 10 die Rede ist, gilt das Gleiche sinngemäss auch für die Stütze 20. Im Steckbereich 30 weist die Stütze 10 mehrere Noppen 31 und zwischen den Noppen 31 entsprechende Ausnehmungen 32 auf. Eine Noppe 31 ist eine höckerartige Erhebung auf der Unterseite der Stütze 10. Vorzugsweise sind die Noppen 31, wie in Figur 4 gezeigt, ausgebildet, das heisst sie verjüngen sich nach unten hin. Dementsprechend sind die Ausnehmungen 32 unten weiter als oben.

Im Steckbereich 30 werden die Noppen 31 in die entsprechenden Vertiefungen 1.1 der Grundplatte 1 und damit die Stütze 10/20 auf die Grundplatte 1 gesteckt.

Figur 5 zeigt eine erste mögliche Anordnung von vier Stützen 10-1, 10-2, 20-1, 20-2 auf zwei Grundplatten 1-1 und 1-2 in einer dreidimensionalen Ansicht. Die zwei Grundplatten 1-1 und 1-2 sind dabei überlappend angeordnet (siehe Figur 2). Um die Stützen 10 voneinander unterscheiden zu können, ist dem Bezugszeichen 10 eine durch einen Bindestrich abgetrennte Nummer nachgestellt. So kennzeichnet das Bezugszeichen 10-1 die erste Stütze 10 und das Bezugszeichen 10-2 die zweite Stütze 10. Sinngemäss das Gleiche gilt für die Stütze 20. Das Bezugszeichen 20-1 kennzeichnet die erste Stütze 20 und das Bezugszeichen 20-2 die zweite Stütze 20.

Figur 6 zeigt die Stütze 20 und die Grundplatte 1 im Querschnitt. Die Stütze 20 ist dabei entlang der Schnittlinie A gemäss Figur 4 geschnitten dargestellt.

Um die Stütze 20 noch besser in der Grundplatte 1 verankern zu können, kann vorgesehen sein, dass die Stütze 20 mittels einer Schraube 50 mit der Grundplatte 1 verschraubt wird. Die Schraube 50 kann von aussen durch eine der äusseren Noppen 31 der Stütze 20 und durch eine der Seitenwände 1.21 der Grundplatte 1 hindurchgehen.

Der Halt der Stütze 20 kann noch weiter verbessert werden, wenn die Schraube 50 nicht nur durch eine der äusseren Noppen 31 und eine der Seitenwände 1.21 hindurchgeht, sondern auch noch durch eine zweite Seitenwand 1.21 hindurchgeht und in eine zweite Noppe 31 hineinragt.

Um den Halt der Stütze 20 auf der Grundplatte 1 noch weiter zu verbessern, kann eine zweite Schraube 50 vorgesehen sein, die sinngemäss wie die erste Schraube 50 eingeschraubt wird. Besonders vorteilhaft ist es, die zweite Schraube 50 von der zur ersten Schraube 50 gegenüberliegenden Seite aus einzuschrauben.

Um die Schraube 50 einfacher in die erste, äussere Noppe 31 hineinschrauben zu können, kann diese Noppe 31 mit einer Vorbohrung 31.1 versehen sein.

Um die Standfestigkeit der Stütze 10 zu erhöhen und zugleich das Gewicht der Stütze gering zu halten, kann vorgesehen sein, dass die Stützte 10 im unteren Bereich, also im Steckbereich 30 breiter als im oberen Bereich (Stützenkopf 35) ausgebildet ist.

Um die Stütze 10 leicht zu machen, ohne dass dies auf Kosten der Stabilität geht, kann vorgesehen sein, dass die Stütze 10 Aussparungen 33 aufweist.

Die Stützen 10, 20 können eine Wandung 34 aufweisen, welche in den Aussparungen 33 angeordnet ist. Damit kann die Stabilität der Stützen 10, 20 erhöht werden.

Die Stützen 10, 20 können aus Kunststoff hergestellt sein. Als Herstellungsverfahren dient beispielsweise das Kokillenverfahren oder das Spritzgussverfahren. Das Kokillenverfahren ist das bevorzugte Herstellungsverfahren.

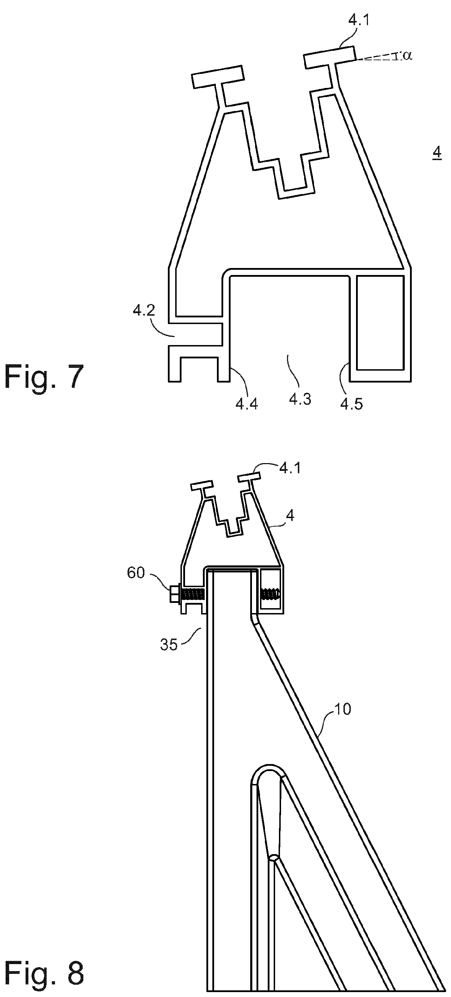

Im oberen Bereich der Stütze 10 kann eine Tragschiene 4 montiert werden, die dazu vorgesehen ist, die Solarmodule 6 zu tragen. In Figur 7 ist eine mögliche Ausführungsform der Tragschiene 4 in einer Seitenansicht und in Figur 8 im auf die Stütze 10 montierten Zustand dargestellt. Die Tragschiene 4 weist im oberen Bereich eine Auflagefläche 4.1 auf, die in einem definierten Neigungswinkel α gegenüber der Horizontalen geneigt ist.

Wenn die Modulträger dazu dienen sollen, Photovoltaikmodule zu tragen, liegt der Neigungswinkel α in der Regel zwischen 5° und 30°, vorzugsweise zwischen 10° und 15°.

Wenn die Stützen 10, 20 mit einer Höhe H10 = 62 cm und einer Höhe H20 = 46 cm gewählt werden, ergibt sich für einen Neigungswinkel α = 10° ein Abstand von Stützenmitte zu Stützenmitte von rund 120 cm.

Wenn die Modulträger dazu dienen sollen, Solarkollektoren zu tragen, liegt der Neigungswinkel α in der Regel zwischen 30° und 60°. Die Höhen H10 und H20 der Stützen 10 und 20 sowie deren Abstand sind abhängig vom gewünschten Neigungswinkel α zu wählen.

Die Tragschiene 4 weist auf seiner Unterseite eine Aufnahme 4.3 auf, die links von der Wand 4.4 und rechts von der Wand 4.5 begrenzt ist. Um die Tragschiene 4 auf der Stütze 10 beziehungsweise den Stützen 10 befestigen zu können, wird die Tragschiene 4 auf die Stütze 10 beziehungsweise die Stützen 10 gesteckt, sodass der Stützenkopf 35 in der Aufnahme 4.3 steckt. Anschliessend kann die Tragschiene 4, vorzugsweise mittels einer Befestigungsschraube 60, auf der Stütze 10 festgeschraubt werden. Die Tragschiene 4 kann dazu eine Nut 4.2 mit einer Nutbreite aufweisen, die etwas kleiner als der Aussendurchmesser der Befestigungsschraube 60 ist. Wird die Befestigungsschraube 60 in die Nut 4.2 hineingedreht, schneidet die Befestigungsschraube 60 ein Gewinde in die Nut 4.2. Wird als Befestigungsschraube 60 beispielsweise eine Gewindeformschraube mit Bohrspitze benutzt, kann sich die Befestigungsschraube 60 selbst durch die Wand 4.4 und die Stütze 10 hindurchbohren. Vorzugsweise ist die Befestigungsschraube 60 so lang, dass sie nicht nur durch die Wandung 4.4 und die Stütze 10 hindurchragt, sondern auch durch die Wandung 4.5 (wie in Figur 8 gezeigt). Auf diese Weise wird eine sichere und hochbelastbare Verbindung zwischen der Tragschiene und der Stütze 10, 20 geschaffen.

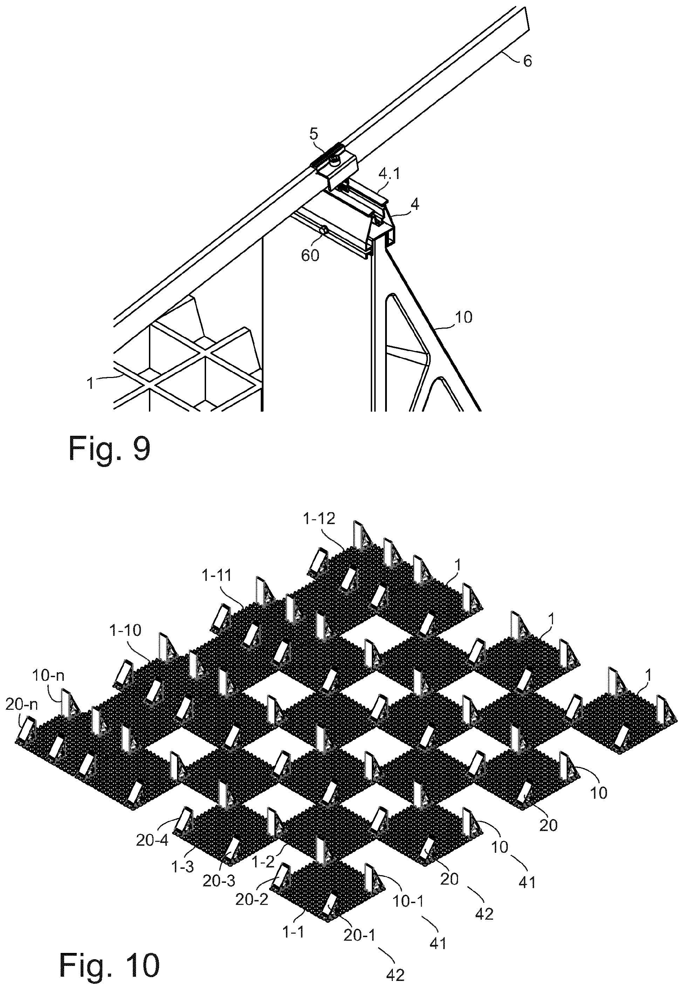

Figur 9 zeigt einen Ausschnitt des Modulträgers mit der Grundplatte 1, der Stütze 10, der Tragschiene 4 und dem Solarmodul 6 in einer dreidimensionalen Ansicht. Die Befestigung des Solarmoduls 6 auf der Tragschiene 4 erfolgt mit Hilfe einer Halterung 5, die mittels einer Schraube von oben auf die Tragschiene 4 geschraubt werden kann. Das Solarmoduls 6 liegt auf der Auflagefläche 4.1 der Tragschiene 4 auf.

Um ein Solarmodulfeld aufzubauen, beginnt man in der Regel mit den Grundplatten 1. Diese werden auf der dafür vorgesehenen Fläche, wie oben beschrieben, überlappend ausgelegt. Dadurch sind die Grundplatten 1 bereits zueinander ausgerichtet, ausreichend fixiert und haben die gewünschten Abstände. In Figur 10 ist beispielhaft gezeigt, wie die Grundplatten 1 angeordnet sein können. Wie in Figur 10 zu erkennen ist, muss nicht die gesamte Grundfläche des Felds mit Grundplatten 1 bedeckt sein. Es genügt die Grundplatten 1 schachbrettartig auszulegen, um dennoch die gesamte Fläche des Felds für Solarmodule nutzen zu können.

Bei Bedarf kann eine Grundplatte 1 geteilt werden, sodass mehrere entsprechend kleinere Grundplatten entstehen. In Figur 10 sind am linken Rand des Felds, weil dort zum Beispiel nicht genügend Platz zur Verfügung steht, einige der kleineren Grundplatten 1-10, 1-11, 1-12 verlegt worden. Möchte man die Grundplatten 1 nicht teilen, so kann man die Grundplatten 1 auch stärker überlappen lassen. Dies hat den Vorteil, dass man die Grundplatte 1 nicht zuschneiden muss und also kein Werkzeug braucht, sondern sie am Stück verlegen kann und die Überlappung entsprechend wählt. Man kann sogar soweit gehen, dass man mehrere Grundplatten 1 fast vollflächig überlappen lässt.

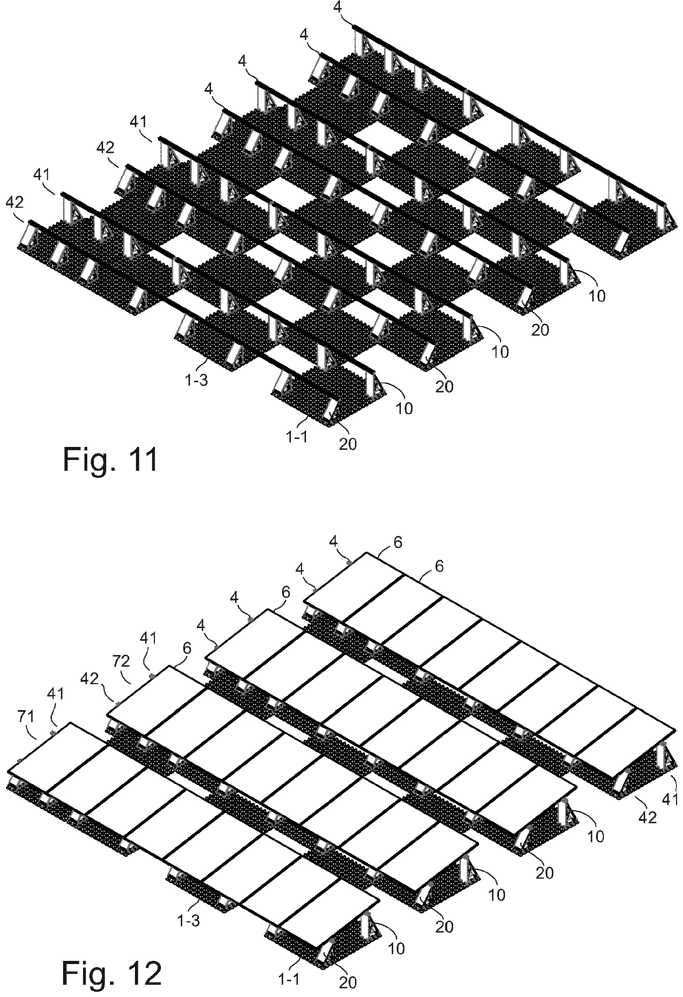

In einem nächsten Arbeitsschritt werden die Stützen 10, 20 auf die Grundplatten 1 gesteckt und vorzugsweise auf die oben beschriebene Weise mit den Grundplatten 1 verschraubt. In Figur 10 sind in der ersten Reihe (in Figur 10 links) niedrige Stützen 20 angeordnet, die eine niedrige Stützreihe 42 bilden. In der zweiten Reihe sind hohe Stützen 10 angeordnet, die eine hohe Stützreihe 41 bilden und in der dritten Reihe wieder niedrige Stützen 20 angeordnet. Diese in der Höhe alternierenden Stützreihen 41 und 42 bewirken, dass am Ende die darauf angeordneten Solarmodule 6 allesamt die selbe Ausrichtung mit dem selben Neigungswinkel α haben, wie dies in Figur 12 zu erkennen ist.

In einem weiteren Arbeitsschritt werden die Tragschienen 4, vorzugsweise wie oben beschrieben, auf den Stützenköpfen 35 befestigt. Figur 11 zeigt das Modulträgerfeld mit den montierten Tragschienen 4. Das fertige Modulträgerfeld mit Solarmodulen 6 ist in Figur 12 dargestellt.

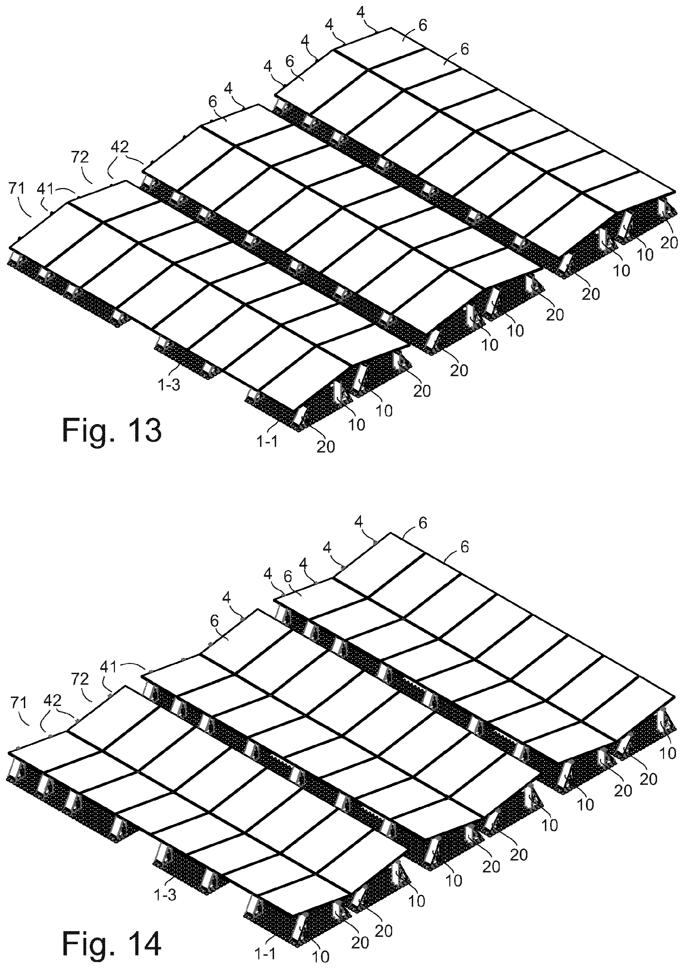

Alternativ zu der in Figur 12 gezeigten Aufständerung können die Stützen 10, 20 auch so angeordnet werden, dass sich das in Figur 13 zeigte Solarmodulfeld ergibt. Dazu werden in der ersten Reihe niedrige Stützen 20, in der zweiten und dritten Reihe jeweils hohe Stützen 10 und in der vierten Reihe wieder niedrige Stützen 20 angeordnet.

Es ist aber auch möglich die Stützen 10, 20 so anzuordnen, dass sich die in Figur 14 gezeigte Aufständerung für das Solarmodulfeld ergibt. Dazu werden in der ersten Reihe hohe Stützen 10, in der zweiten und dritten Reihe jeweils niedrige Stützen 20 und in der vierten Reihe wieder hohe Stützen 10 angeordnet.

Auch der Abstand der Solarmodule 6 zueinander ist im Rahmen des durch die Grundplatten 1 vorgegebenen Rastermasses frei wählbar. So können die erste Reihe Solarmodule 71 und die zweite Reihe Solarmodule 72 auch weiter voneinander beabstandet werden, indem die erste und zweite Stützenreihe weiter beabstandet von der dritten Stützenreihe angeordnet werden. Selbstverständlich können die Solarmodulreihen auch näher zueinander angeordnet werden.

Die vorhergehende Beschreibung der Ausführungsbeispiele gemäss der vorliegenden Erfindung dient zu illustrativen Zwecken. Im Rahmen der Erfindung sind verschiedene Änderungen und Modifikationen möglich. So sind beispielsweise die verschiedenen in den Figuren 1 bis 14 gezeigten Komponenten auch auf eine andere als in den Figuren gezeigte Weise miteinander kombinierbar beziehungsweise anordenbar.

### Bezugszeichenliste

- 1: Grundplatte
- 1.1: Vertiefung
- 1.2: Steg
- 1.21: Seitenwand des Stegs
- 1-1: 1. Grundplatte
- 1-2: 2. Grundplatte
- 1-3: 3. Grundplatte
- 1-4: 4. Grundplatte
- 1-n: n-te Grundplatte
- 1-10: geteilte Grundplatte
- 1-11: geteilte Grundplatte
- 1-12: geteilte Grundplatte
- 2: Überlappung
- 4: Tragschiene / Profilschiene
- 4.1: Auflagefläche
- 4.2: Nut
- 4.3: Aufnahme
- 5: Halterung
- 6: Solarmodul
- 10: Stütze vom Typ 1
- 10-1: 1. Stütze vom Typ
- 10-2: 1 2. Stütze vom Typ 1
- 10-3: 3. Stütze vom Typ 1
- 10-4: 4. Stütze vom Typ 1
- 10-n: n-te Stütze vom Typ 1
- 20: Stütze vom Typ 2
- 20-1: 1. Stütze vom Typ 2
- 20-2: 2. Stütze vom Typ 2
- 20-3: 3. Stütze vom Typ 2
- 20-4: 4. Stütze vom Typ 2
- 20-n: n-te Stütze vom Typ 2
- 30: Steckbereich
- 31: Noppe
- 31.1: Vorbohrung
- 32: Ausnehmung
- 33: Aussparung
- 34: Wandung
- 35: Stützenkopf
- 41: Stützreihe
- 42: Stützreihe
- 50: Schraube
- 60: Befestigungsschraube
- 71: erste Reihe Solarmodule
- 72: zweite Reihe Solarmodule
- α: Neigungswinkel
- H10: Höhe der Stütze 10 / erste Höhe
- H20: Höhe der Stütze 20 / zweite Höhe
- B: Breite der Vertiefung 1.1
- L: Länge der Vertiefung 1.1
- x: x-Achse
- y: y-Achse
- z: z-Achse

## Patentansprüche

1. Modulträger für Solarmodule,
- bei dem eine Grundplatte (1) mit Vertiefungen (1.1) vorgesehen ist,
- bei dem mehrere Stützen (10-1, ... 10-n; 20-1, ... 20-n) vorgesehen sind,
- bei dem jede der Stützen (10-1, ... 10-n; 20-1, ... 20-n) auf ihrer Unterseite einen Steckbereich (30) mit mehreren Noppen (31) aufweist, der so ausgebildet ist, dass die Noppen (31) in die Vertiefungen (1.1) der Grundplatte (1) steckbar sind,
- bei dem die Vertiefungen (1.1) rasterartig über die Grundplatte (1) verteilt sind,
- bei dem die Grundplatte (1) Stege (1.2) aufweist, die gitterförmig über die Grundplatte (1) verteilt sind, und
- bei dem die Vertiefungen (1.1) durch die Stege (1.2) voneinander abgegrenzt sind.

2. Modulträger nach Patentanspruch 1,
bei dem ein Teil der Stützen (10-1, ... 10-n) eine erste Höhe (H10) und weiterer Teil der Stützen (20-1, ... 20-n) eine von der ersten Höhe (H10) abweichende zweite Höhe (H20) aufweisen.

3. Modulträger nach einem der Patentansprüche 1 oder 2, bei dem die Vertiefungen (1.1) die gleiche Form aufweisen.

4. Modulträger nach einem der Patentansprüche 1 bis 3, bei dem die Stege (1.2) einen dreieck- oder trapezförmigen Querschnitt aufweisen.

5. Modulträger nach einem der Patentansprüche 1 bis 4,
- bei dem die Stege (1.2) und Vertiefungen (1.1) der Grundplatte (1) eine Positivform bilden, und
- bei dem die Stütze (10; 20) in ihrem Steckbereich (30) eine zur Positivform passende Negativform aufweist, sodass die Stütze (10; 20) im auf die Grundplatte (1) gesteckten Zustand mit der Grundplatte (1) einen Formschluss bildet.

6. Modulträger nach einem der vorherigen Patentansprüche 1 bis 5,
bei dem die Stütze (10; 20) im Steckbereich (30) breit ausgebildet ist und sich nach oben hin verjüngt.

7. Modulträger nach einem der vorherigen Patentansprüche 1 bis 6,
bei dem die Stütze (10; 20) mittels einer oder mehrerer Schrauben (50) oder Nägel mit der Grundplatte (1) verbunden ist.

8. Modulträger nach Patentanspruch 7,
bei dem die Schraube (50) so angeordnet ist, dass sie durch mindestens eine der Noppen (31) und mindestens eine der Seitenwände (1.21) eines der Stege (1.2) hindurchragt.

9. Modulträger nach Patentanspruch 7,
bei dem die Schraube (50) so angeordnet ist, dass sie durch eine der Noppen (31) und die beiden Seitenwände (1.21) eines der Stege (1.2) hindurchragt und in eine der weiteren Noppen (31) hineinragt.

10. Modulträger nach einem der vorherigen Patentansprüche 1 bis 9,
bei dem die Grundplatte (1) aus Kunststoff hergestellt ist.

11. Modulträger nach einem der vorherigen Patentansprüche 1 bis 10,
bei dem die Stützen (10; 20) aus Kunststoff hergestellt sind.

12. Modulträger nach einem der vorherigen Patentansprüche 1 bis 11,
- bei dem eine Tragschiene (4) vorgesehen ist, die oben an den Stützen (10-1, ... 10-n; 20-1, ... 20-n) befestigt ist, und
- bei dem die Tragschiene (4) zur Tragen von Solarmodulen (6) vorgesehen ist.

13. Modulträger nach Patentanspruch 12,
- bei dem eine Befestigungsschraube (60) vorgesehen ist, um die Tragschiene (4) mit der Stütze (10; 20) zu verbinden,
- bei dem die Tragschiene (4) eine Nut (4.2) mit einer Nutbreite aufweist, die kleiner als der Durchmesser der Befestigungsschraube (60) ist.

14. Anordnung mit mehreren Modulträgern nach einem der vorigen Patentansprüche 1 bis 13,
bei der die Grundplatte (1-1) eines ersten Modulträgers auf der Grundplatte (1-2) eines zweiten Modulträgers überlappend aufliegt und die beiden Grundplatten (1-1, 1-2) im überlappenden Bereich in beiden horizontalen Dimensionen einen Formschluss bilden.

15. Anordnung nach Patentanspruch 14,
bei der die Schraube (50) so angeordnet ist, dass sie durch mindestens eine der Noppen (31), durch mindestens eine der Seitenwände (1.21) eines der Stege der Grundplatte (1-1) des ersten Modulträgers und durch mindestens eine der Seitenwände (1.21) eines der Stege der Grundplatte (1-2) des zweiten Modulträgers hindurchragt.

16. Anordnung nach einem der Patentansprüche 14 oder 15,
- bei der die Stützen (10-1, ... 10-n) mit der ersten Höhe (H10) über die Tragschiene (4) verbunden sind und als eine hohe Stützreihe (41) dienen,
- bei der die Stützen (20-1, **...** 20-n) mit der zweiten Höhe (H20) über eine weitere Tragschiene (4) verbunden sind und als eine niedrige Stützreihe (42) dienen, und
- bei der die niedrige und die hohe Stützreihe (41, 42) vorgesehen sind, um Solarmodule (6) zu tragen.

17. Anordnung nach Patentanspruch 16,
bei der mehrere niedrige und mehrere hohe Stützreihen (41, 42) alternierend angeordnet sind.

18. Anordnung nach Patentanspruch 17,
bei der mehrere niedrige und mehrere hohe Stützreihen (41, 42) vorgesehen sind, wobei zwei der niedrigen Stützreihen (42) benachbart angeordnet sind.

19. Verwendung der Modulträger nach einem der vorigen Patentansprüche 1 bis 13,
zum Tragen von Solarmodulen (6), und insbesondere von Photovoltaikmodulen und/oder Solarkollektoren.

## Claims

1. A module holder for solar modules,
- wherein a base plate (1) with depressions (1.1) is provided,
- wherein several supports (10-1, ... 10-n; 20-1, ... 20-n) are provided,
- wherein on its underside each of the supports (10-1, ... 10-n; 20-1, ... 20-n) has a plug-in region (30) with several nubs (31), which plug-in region is formed such that the nubs (31) can be plugged into the depressions (1.1) of the base plate (1),
- wherein the depressions (1.1) are distributed over the base plate (1) in a grid-like manner,
- wherein the base plate (1) has webs (1.2), which are distributed over the base plate (1) in a lattice-shaped manner, and
- wherein the depressions (1.1) are delimited from one another by means of the webs (1.2).

2. The module holder according to claim 1,
wherein a portion of the supports (10-1, ... 10-n) has a first height (H10) and a further portion of the supports (20-1, ... 20-n) has a second height (H20), which differs from the first height (H10).

3. The module holder according to any one of claims 1 or 2, wherein the depressions (1.1) have the same shape.

4. The module holder according to any one of claims 1 to 3, wherein the webs (1.2) have a triangular or trapezoidal cross section.

5. The module holder according to any one of claims 1 to 4,
- wherein the webs (1.2) and depressions (1.1) of the base plate (1) form a positive mold and
- wherein in its plug-in region (30) the support (10; 20) has a negative mold matching the positive mold, so that the support (10; 20) forms a positive connection with the base plate (1) when plugged onto the base plate (1).

6. The module holder according to any one of the preceding claims 1 to 5,
wherein the support (10; 20) is formed to be wide in the plug-in region (30) and tapers upwards.

7. The module holder according to any one of the preceding claims 1 to 6,
wherein the support (10; 20) is connected to the base plate (1) by means of one or several screws (50) or nails.

8. The module holder according to claim 7,
wherein the screw (50) is arranged such that it protrudes through at least one of the nubs (31) and at least one of the side walls (1.21) of one of the webs (1.2).

9. The module holder according to claim 7,
wherein the screw (50) is arranged such that it protrudes through one of the nubs (31) and the two side walls (1.21) of one of the webs (1.2) and protrudes into one of the further nubs (31).

10. The module holder according to any one of the preceding claims 1 to 9,
wherein the base plate (1) is made of plastic.

11. The module holder according to any one of the preceding claims 1 to 10,
wherein the supports (10; 20) are made of plastic.

12. The module holder according to any one of the preceding claims 1 to 11,
- wherein a holding rail (4) is provided, which is fastened to the supports (10-1, ... 10-n; 20-1, ... 20-n) on the top and
- wherein the holding rail (4) is provided for holding solar modules (6).

13. The module holder according to claim 12,
- wherein a fastening screw (60) is provided in order to connect the holding rail (4) to the support (10; 20),
- wherein the holding rail (4) has a groove (4.2) with a groove width, which is smaller than the diameter of the fastening screw (60).

14. An assembly with several module holders according to any one of the preceding claims 1 to 13,
wherein the base plate (1-1) of a first module holder bears on the base plate (1-2) of a second module holder in an overlapping manner and the two base plates (1-1, 1-2) form a positive connection in the overlapping region in both horizontal dimensions.

15. The assembly according to claim 14,
wherein the screw (50) is arranged such that it protrudes through at least one of the nubs (31), through at least one of the side walls (1.21) of one of the webs of the base plate (1-1) of the first module holder and through at least one of the side walls (1.21) of one of the webs of the base plate (1-2) of the second module holder.

16. The assembly according to any one of claims 14 or 15,
- wherein the supports (10-1, ... 10-n) with the first height (H10) are connected via the holding rail (4) and serve as a high support row (41),
- wherein the supports (20-1, ... 20-n) with the second height (H20) are connected via a further holding rail (4) and serve as a low support row (42) and
- wherein the low and the high support row (41, 42) are provided to hold solar modules (6).

17. The assembly according to claim 16,
wherein several low and several high support rows (41, 42) are arranged in an alternating manner.

18. The assembly according to claim 17,
wherein several low and several high support rows (41, 42) are provided, wherein two of the low support rows (42) are arranged adjacent to one another.

19. Use of the module holders according to any one of the preceding claims 1 to 13,
for holding solar modules (6) and in particular photovoltaic modules and/or solar collectors.

## Revendications

1. Support de modules pour modules solaires,
- dans lequel une plaque de base (1) est pourvue de renfoncements (1.1),
- dans lequel plusieurs éléments de support (10-1, ... 10-n ; 20-1, ... 20-n) sont prévus,
- dans lequel chacun des éléments de support (10-1, ... 10-n ; 20-1, ... 20-n) présente, sur sa face inférieure, une zone d'emboîtement (30) comportant plusieurs picots (31), conçue de manière à ce que les picots (31) puissent être insérés dans les renfoncements (1.1) de la plaque de base (1),
- dans lequel les renfoncements (1.1) sont répartis en réseau sur la plaque de base (1),
- dans lequel la plaque de base (1) comporte des nervures (1.2) réparties en forme de grille sur la plaque de base (1), et
- dans lequel les renfoncements (1.1) sont délimités les uns des autres par les nervures (1.2).

2. Support de modules selon la revendication 1,
dans lequel une partie des éléments de support (10-1, ... 10-n) présente une première hauteur (H10) et une autre partie des éléments de support (20-1, ... 20-n) présente une deuxième hauteur (H20) différente de la première hauteur (H10).

3. Support de modules selon l'une des revendications 1 ou 2,
dans lequel les renfoncements (1.1) présentent la même forme.

4. Support de modules selon l'une des revendications 1 à 3,
dans lequel les nervures (1.2) présentent une section transversale de forme triangulaire ou trapézoïdale.

5. Support de modules selon l'une des revendications 1 à 4,
- dans lequel les nervures (1.2) et les renfoncements (1.1) de la plaque de base (1) forment une forme positive, et
- dans lequel l'élément de support (10 ; 20) présente, dans sa zone d'emboîtement (30), une forme négative correspondant à la forme positive, de sorte que, lorsque l'élément de support (10 ; 20) est emboîté sur la plaque de base (1), il forme avec celle-ci un assemblage par complémentarité de forme.

6. Support de modules selon l'une des revendications précédentes 1 à 5,
dans lequel l'élément de support (10 ; 20) est large au niveau de la zone d'emboîtement (30) et se rétrécit vers le haut.

7. Support de modules selon l'une des revendications précédentes 1 à 6,
dans lequel l'élément de support (10 ; 20) est relié à la plaque de base (1) au moyen d'une ou de plusieurs vis (50) ou de clous.

8. Support de modules selon la revendication 7,
dans lequel la vis (50) est disposée de manière à traverser au moins l'un des picots (31) et au moins l'une des parois latérales (1.21) de l'une des nervures (1.2).

9. Support de modules selon la revendication 7,
dans lequel la vis (50) est disposée de manière à traverser l'un des picots (31) et les deux parois latérales (1.21) de l'une des nervures (1.2), et à pénétrer dans l'un des autres picots (31).

10. Support de modules selon l'une des revendications précédentes 1 à 9,
dans lequel la plaque de base (1) est fabriquée en matière plastique.

11. Support de modules selon l'une des revendications précédentes 1 à 10,
dans lequel les éléments de support (10 ; 20) sont fabriqués en matière plastique.

12. Support de modules selon l'une des revendications précédentes 1 à 11,
- dans lequel un rail porteur (4) est prévu, lequel est fixé sur la partie supérieure des éléments de support (10-1, ... 10-n ; 20-1, ... 20-n), et
- dans lequel le rail porteur (4) est destiné à supporter des modules solaires (6).

13. Support de modules selon la revendication 12,
- dans lequel une vis de fixation (60) est prévue pour relier le rail porteur (4) à l'élément de support (10 ; 20),
- dans lequel le rail porteur (4) présente une rainure (4.2) ayant une largeur inférieure au diamètre de la vis de fixation (60).

14. Disposition comprenant plusieurs supports de modules selon l'une des revendications précédentes 1 à 13, dans laquelle la plaque de base (1-1) d'un premier support de modules repose, en chevauchement, sur la plaque de base (1-2) d'un deuxième support de modules, et dans laquelle les deux plaques de base (1-1, 1-2) forment, dans la zone de chevauchement, un assemblage par complémentarité de forme dans les deux dimensions horizontales.

15. Disposition selon la revendication 14,
dans laquelle la vis (50) est disposée de manière à traverser au moins l'un des picots (31), au moins l'une des parois latérales (1.21) de l'une des nervures de la plaque de base (1-1) du premier support de modules, ainsi qu'au moins l'une des parois latérales (1.21) de l'une des nervures de la plaque de base (1-2) du deuxième support de modules.

16. Disposition selon l'une des revendications 14 ou 15,
- dans laquelle les éléments de support (10-1, ... 10-n) ayant la première hauteur (H10) sont reliés par le rail porteur (4) et servent de rangée d'éléments de support haute (41),
- dans lequel les éléments de support (20-1, ... 20-n) ayant la deuxième hauteur (H20) sont reliés par un autre rail porteur (4) et servent de rangée d'éléments de support basse (42), et
- dans lequel la rangée d'éléments de support basse et la rangée d'éléments de support haute (41, 42) sont prévues pour supporter des modules solaires (6).

17. Disposition selon la revendication 16,
dans laquelle plusieurs rangées d'éléments de support basses et plusieurs rangées d'éléments de support hautes (41, 42) sont disposées de manière adjacente.

18. Disposition selon la revendication 17,
dans laquelle plusieurs rangées d'éléments de support basses et plusieurs rangées d'éléments de support hautes (41, 42) sont prévues, deux des rangées d'éléments de support basses (42) étant disposées de manière adjacente.

19. Utilisation des supports de modules selon l'une des revendications précédentes 1 à 13,
pour supporter des modules solaires (6), et notamment des modules photovoltaïques et/ou des capteurs solaires.
